(19) Europäisches Patentamt
European Patent Office
Office européen des brevets

(11) **EP 1 004 036 B1**

(12) **EUROPÄISCHE PATENTSCHRIFT**

(45) Veröffentlichungstag und Bekanntmachung des Hinweises auf die Patenterteilung:
**16.10.2002   Patentblatt 2002/42**

(21) Anmeldenummer: **98947346.7**

(22) Anmeldetag: **27.07.1998**

(51) Int Cl.[7]: **G01S 13/34**, G01S 7/35

(86) Internationale Anmeldenummer:
**PCT/DE98/02114**

(87) Internationale Veröffentlichungsnummer:
**WO 99/010757 (04.03.1999 Gazette 1999/09)**

(54) **VERFAHREN UND VORRICHTUNG ZUR ABSTANDS- UND GESCHWINDIGKEITSMESSUNG**

METHOD AND DEVICE FOR MEASURING DISTANCE AND SPEED

PROCEDE ET DISPOSITIF DE MESURE DE DISTANCE ET DE VITESSE

(84) Benannte Vertragsstaaten:
**DE FR GB NL SE**

(30) Priorität: **22.08.1997   DE 19736693**

(43) Veröffentlichungstag der Anmeldung:
**31.05.2000   Patentblatt 2000/22**

(73) Patentinhaber: **SIEMENS AKTIENGESELLSCHAFT
80333 München (DE)**

(72) Erfinder:
• **STORCK, Eckhard
D-81475 München (DE)**
• **VOSSIEK, Martin
D-80789 München (DE)**
• **HEIDE, Patric
D-85579 Neubiberg (DE)**

(56) Entgegenhaltungen:
**US-A- 5 560 367**

• **BHASKAR D RAO ET AL: "MODEL BASED PROCESSING OF SIGNALS: A STATE SPACE APPROACH" PROCEEDINGS OF THE IEEE, Bd. 80, Nr. 2, 1. Februar 1992, Seiten 283-309, XP000291184 in der Anmeldung erwähnt**

# EP 1 004 036 B1

**Beschreibung**

Eine Aufgabe der Sensorik ist die berührungslose, präzise Messung von Abständen und Geschwindigkeiten. Mikrowellen, Lichtwellen oder Ultraschall werden dafür eingesetzt. Derartige Sensoren finden vielfältige Anwendungen, beispielsweise in der industriellen Automatisierung, in der Automobiltechnik und im Haushalt. Gebräuchlich sind Radarsensoren nach dem FMCW-Prinzip (frequency modulated continuous wave).

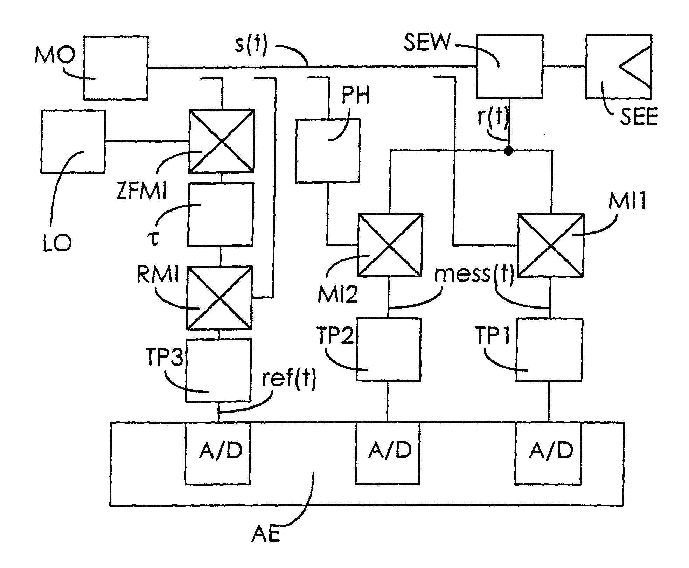

Ein typisches Schaltbild eines FMCW-Sensors zeigt die Figur (s. auch A. G. Stove: "Linear FMCW radar techniques", IEE Proc.-F 139, 343-350 (1992)). Die Signalquelle ist ein frequenzmodulierbarer Oszillator (MO). Dieser Oszillator wird über eine Ansteuereinheit in seiner Frequenz zeitabhängig verstimmt. Der Sensor strahlt über die Sende-Empfangseinheit SEE das Sendesignal s(t) ab und empfängt ein entsprechend der Laufzeit zum Meßobjekt zeitverzögertes Empfangssignal r(t). Eine Trennung von Sende- und Empfangssignal wird zum Beispiel durch eine Sende- und Empfangsweiche (SEW) bewirkt (etwa ein Zirkulator oder ein Richtkoppler). Alternativ können getrennte Antennen für Senden und Empfangen verwendet werden (sogenannte bistatischen Anordnung). Das in einem Mischer MI1 erzeugte Meßsignal mess(t), das dem Mischprodukt (Differenzfrequenz) aus Sendesignal s(t) und Empfangssignal r(t) entspricht, wird mit einem Tiefpaßfilter TP1 gefiltert. Zur Erzeugung eines Meßsignals, das eine Darstellung als komplexe Zahl erlaubt, kann das Empfangssignal r(t) in einem zweiten Mischer MI2 mit dem in einem Phasenschieber PH um π/2 phasenverschobenen Sendesignal gemischt und anschließend in einem zweiten Tiefpaßfilter TP2 gefiltert werden. Die Auswerteeinheit AE ist vorzugsweise mit einem Digitalsignalprozessor aufgebaut, dem das mittels Analog-Digital-Wandlern A/D digitalisierte Meßsignal als Realteil Kosinus und Imaginärteil Sinus des komplexen Signals zugeführt wird. Die Frequenzmodulation des Sendesignals erfolgt in der Regel zeitlich linear (s. H. D. Griffiths: "The Effect of Phase and Amplitude Errors in FM Radar", IEEE Colloquium on High Time-Bandwidth Product Waveforms in Radar and Sonar, London, UK, May 1st, 1991, pp. 9/1-9/5).

In der DE 195 33 124 ist ein Verfahren beschrieben, bei dem Fehler der Frequenzmodulation unter Verwendung einer Verzögerungsleitung detektiert und korrigiert werden. In der Figur ist eine solche Verzögerungsleitung eingezeichnet, die ein Verzögerungselement τ (vorzugsweise ein Oberflächenwellenbauelement) und einen weiteren Mischer RMI umfaßt. Vorzugsweise ist ein weiteres Tiefpaßfilter TP3 nachgeschaltet. In dem weiteren Mischer RMI wird das verzögerte Signal mit dem aktuellen Sendesignal zu einem Bezugssignal gemischt. In der Auswerteeinheit AE wird ein Korrektursignal errechnet, das auch dazu dienen kann, über eine programmierbare Ansteuereinheit eine Korrektur der Freqenzmodulation vorzunehmen. In der Figur ist ein Sensorsystem dargestellt, bei dem die Sendefrequenz vor der Verzögerung in einem Mischer ZFMI auf eine niedrigere Zwischenfrequenz gemischt wird. Dafür ist der Lokaloszillator LO vorgesehen, der eine niedrigere Frequenz liefert als die Signalquelle MO.

In jedem Fall besteht das Sensorsignal mess(t) eines FMCW-Radarsensors aus einer Überlagerung diskreter Sinusschwingungen, deren Freqenzen die zu messenden Größen (Abstand, Laufzeit, Geschwindigkeit) repräsentieren. Bei einem Füllstandssensor z.B. ist die Frequenz des Sensorsignals proportional zur Differenz zwischen Behälter- und Füllhöhe; bei Vorhandensein mehrerer Meßobjekte treten entsprechend mehrere Frequenzen auf. Bewegt sich ein Objekt, so wird der abstandsabhängigen Frequenz des Sensorsignals eine zusätzliche Dopplerfrequenz additiv überlagert. Im Spezialfall eines CW-Radarsensors wird nur diese Dopplerfrequenz detektiert, die die Objektgeschwindigkeit repräsentiert.

Zur Auswertung des Frequenzspektrums von Meßsignalen wird üblicherweise die Fouriertransformation verwendet. Bei dieser "Fourieranalyse" ist das Auflösungsvermögen, mit dem benachbarte Frequenzen getrennt werden können, aufgrund verschiedener Einflüsse begrenzt. Bei FMCW-Sensoren ergibt sich das beschränkte Auflösungsvermögen auch aus der durch die Technik oder durch Zulassungsbestimmungen begrenzten Bandbreite der Frequenzmodulation. Andererseits ist eine möglichst hohe Frequenzauflösung wünschenswert, damit Störfrequenzen möglichst weitgehend von den Signalfrequenzen getrennt werden können.

Zur Steigerung der Frequenzauflösung von FMCW-Sensoren wurde in der Literatur die Anwendung von autoregressiven Verfahren (AR; spezielle parametrische Modellverfahren) diskutiert (L. G. Cuthbert et al.: "Signal processing in an FMCW radar for detecting voids and hidden objects in building materials" in I. T. Young et al. (eds.): "Signal Processing III: Theories and Applications", Elsevier Science Publishers B.V., EURASIP 1986). Tatsächlich kann man mit modernen parametrischen Modellverfahren (AR, MA und ARMA; S. M. Kay: "Modern Spectral Estimation, Theory and Application", Prentice Hall, Englewood Cliffs, NJ, 1988) höhere Frequenzauflösung als mit der Fourieranalyse erzielen, aber nur bei hinreichend großem Störabstand des Meßsignals, der bei einer typischen Datenlänge von N = 100 mehr als 40 dB betragen muß. Diese Voraussetzung ist jedoch bei einem FMCW-Sensor im allgemeinen nicht erfüllt.

In dem Lehrbuch von S. L. Marple, jr.: "Digital Spectral Analysis with Applications", Prentice Hall, Englewood Cliffs, NJ, 1988, werden Verfahren zur Analyse von Frequenzspektren beschrieben, bei denen auf Prony zurückgehende mathematische Untersuchungen mit einer sogenannten Eigenwertzerlegung (singular value decomposition, im folgenden mit SVD bezeichnet) kombiniert werden. Diese Verfahren sind immer dann besonders erfolgreich, wenn das Signal x(n) gemäß

2

$$x(n) = \sum_{k=1}^{p} c_k \, e^{2\pi i f_k n} + R(n), \qquad n = 1, 2, 3, \ldots, N,$$

(1)

aus einer endlichen Anzahl p diskreter Frequenzen $f_k$ (mit den Amplituden $c_k$) und Rauschen R(n) besteht. Dies ist bei FMCW-Sensoren der Fall, insbesondere in Verbindung mit der oben beschriebenen Entzerrung durch eine OFW-Verzögerungsleitung.

Die Frequenzen $f_k$ und ihre Anzahl p, sowie die dazugehörigen (komplexen) Amplituden $c_k$ sind aus dem endlichen Datensatz [x(1),x(2), ..., x(N)] zu bestimmen. Bei dem zugrundeliegenden Prony-Verfahren (ohne SVD) werden aus den x(n) in einem ersten Schritt die sogenannten FBLP-Koeffizienten (Forward Backward Linear Prediction) a(k) (k=0,...,p) berechnet. Diese erfüllen die Gleichungen

$$a(0)x(n) + a(1)x(n-1) + \ldots + a(p)x(n-p) = 0 \tag{2a}$$

und mit den komplex konjugierten Daten x*(n) in umgekehrter Reihenfolge

$$a(0)x^*(n-p) + a(1)x^*(n-p+1) + \ldots + a(p)x^*(n) = 0 \tag{2b}$$

für n = p+1, p+2, ..., N.

Insgesamt N-p solcher linearer Gleichungspaare (2a, 2b) können mit dem gegebenen Datensatz [x(1),x(2), ..., x(N)] aufgestellt werden, also 2(N-p) Gleichungen; und daraus können die a(k) bestimmt werden. Im allgemeinen (wenn N > 2p ist) besteht das Gleichungssystem (2a, 2b) aus mehr Gleichungen als Unbekannten a(k). Dann wird zur Lösung das Verfahren nach dem Prinzip der kleinsten Summe der Fehler-Quadrate ("Least Squares"-Verfahren, im folgenden LS) eingesetzt und dadurch über Störeinflüsse durch die Rauschkomponenten R(n) aus Gleichung (1) gemittelt: Allgemein ist für ein überbestimmtes lineares Gleichungssystem $A * x = b$ die LS-Lösung durch

$$x = (A^H {}_* A)^{-1} {}_* A^H {}_* b$$

gegeben (s. z.B. das Lehrbuch von Marple, Seite 77).

Die gesuchten Signalfrequenzen $f_k$ werden dann in einem **zweiten Schritt** aus den Nullstellen $z_k$ des mit den a(k) gemäß

$$P(z) = \sum_{k=0}^{p} a(k) * z^{p-k}$$

(3)

gebildeten Polynoms P(z) berechnet. Ist etwa $z_k$ eine von den p Nullstellen, also $P(z_k) = 0$, so ist

$$\exp(2\pi i f_k) = z_k. \tag{4}$$

Sind die Frequenzen bestimmt, dann bilden die Gleichungen

$$x(n) \;=\; \sum_{k=1}^{p} c_k\, e^{2\pi i f_k n}\,, \quad n = 1,\ 2,\ 3,\ \dots,\ N,$$

(5)

ein im allgemeinen überbestimmtes lineares Gleichungssystem für die p Amplituden $c_k$, das in einem **dritten Schritt** durch LS-Verfahren (s.o.) gelöst wird, wodurch abermals über Störeinflüsse durch die R(n)-Komponenten gemittelt wird.

Die mit diesem Verfahren erzielbaren Ergebnisse sind nur bei großem Störabstand des Meßsignals günstiger als mit Fourieranalyse. Außerdem ist der Modellparameter p im allgemeinen nicht bekannt und seine Bestimmung ist problematisch. Verbesserungen werden erzielt durch Anwendung der SVD (D. W. Tufts, R. Kumaresan: "Estimation of Frequencies of Multiple Sinusoids: Making Linear Prediction Perform Like Maximum Likelihood", Proc. IEEE 70, 975-989 (1982)).

Es werden weit mehr FBLP-Koeffizienten a(k) eingeführt als die Anzahl p der erwarteten Frequenzen, etwa L(>p). Die zu (2a) und
(2b) analogen Gleichungen lauten dann

$$a(0)x(n) + a(1)x(n-1) + ... + a(L)x(n-L) = 0, \tag{6a}$$

$$a(0)x^*(n-L) + a(1)x^*(n-L+1) + ... + a(L)x^*(n) = 0, \; (6b) \tag{6b}$$

für n = L+1, L+2, ..., N mit p < L < N - p.

Diese N-L Paare von Gleichungen können zusammengefaßt werden zu

$$[a(L),\ a(L-1),\ ...,\ a(0)] * D_{NL} = 0 \tag{7}$$

(* bezeichnet die Matrizenmultiplikation) mit

$$D_{NL} = \begin{bmatrix} x(1) & x(2) & \dots & x(N-L) & x^*(N) & x^*(N-1) & \dots & x^*(L+1) \\ x(2) & x(3) & \dots & x(N-L+1) & x^*(N-1) & x^*(N-2) & \dots & x^*(L) \\ \vdots & \vdots & \vdots & \vdots & \vdots & \vdots & \vdots & \vdots \\ x(L+1) & x(L+2) & \dots & x(N) & x^*(N-L) & x^*(N-L-1) & \dots & x^*(1) \end{bmatrix}$$

.

Hier sind die Meßdaten in einer Matrix, einer sogenannten doppelten Hankel-Matrix (double Hankel matrix), angeordnet. Jede Spalte dieser Matrix liefert mit dem Zeilenvektor [a(L), a(L-1), ..., a(0)] multipliziert eine der Gleichungen (6a, 6b). Wenn das Signal x(n) kein Rauschen, also nur p Exponentialschwingungen enthalten würde, dann wäre das Gleichungssystem zur Bestimmung der L Koeffizienten a(k) überbestimmt, d.h. von den Gleichungen (6a) und (6b) wären nur p linear unabhängig. Dementsprechend hätte die Matrix $D_{NL}$ den Rang (rank) p (< L). Ist aber Rauschen vorhanden, so hat $D_{NL}$ im allgemeinen maximalen Rang (2N-2L oder L+1) und hat nur näherungsweise den kleineren Rang p.

Mit Hilfe einer sogenannten "Singular Value Decomposition" (SVD) wird aus $D_{NL}$ eine Matrix bestimmt, die den Rang p hat und eine Näherung von $D_{NL}$ ist im Sinne der aus der Literatur bekannten LS-Verfahren (kleinste Summe der Quadrate der Abweichungen). Die SVD zerlegt die Matrix $D_{NL}$ gemäß

$$D_{NL} = U * S * V^H \tag{8}$$

in zwei unitäre Matrizen U und V ($V^H$ ist die adjungierte [adjoint] Matrix zu V) sowie eine Matrix S, die eine quadratische und positiv definite Diagonalmatrix ist oder eine quadratische und positiv definite Diagonalmatrix als Teilmatrix enthält und im übrigen nur Nullen als Elemente besitzt. Die Diagonalelemente $S_{kk}$ (die sogenannten Singular Values von $D_{NL}$) dieser "Diagonal-Matrix" S sind der Größe nach angeordnet gemäß $S_{11} \geq S_{22} \geq ... \geq S_{LL} \geq 0$.

Die Anzahl der von 0 verschiedenen Diagonalelemente ist gleich dem Rang von $D_{NL}$. Wenn das Signal x(n) kein Rauschen, also nur p Exponentialschwingungen enthalten würde, dann wären genau p (< L) Diagonalelemente, die sogenannten "Principal Components" (PC), von null verschieden, die übrigen wären gleich null. Ist aber Rauschen vorhanden, so sind die übrigen Diagonalelemente im allgemeinen zwar $\neq 0$, aber klein gegen die Principal Components. Sie werden näherungsweise gleich null gesetzt ("PC-Verfahren"). Damit erhält man eine Näherung S̱ von S.

Mit dieser Näherung S̱ anstatt von S in der SVD-Zerlegung (8) erhält man gemäß

$$D\underline{\,}_{NL} = U *S\underline{\,} * V^H \tag{9}$$

eine p-rangige Näherung $D\underline{\,}_{NL}$ für die Matrix $D_{NL}$. Mit $D\underline{\,}_{NL}$ anstatt $D_{NL}$ werden nun die FBLP-Koeffizienten a(k) aus dem Gleichungssystem

$$[a(L), a(L-1), ..., a(0)] * D\underline{\,}_{NL} = 0 \tag{10}$$

berechnet und damit die oben geschilderten Schritte zwei und drei (Prony) durchgeführt.

Da der Rang von $D\underline{\,}_{NL}$ gleich p (< L) ist, ist das Gleichungssystem (7a) unterbestimmt, d.h. seine Lösung ist zunächst nicht eindeutig. Eindeutig ist aber die Lösung mit der kleinsten

$$Norm\{a(k)\} = \sqrt{\sum_{k=0}^{L} |a(k)|^2}$$

unter der Nebenbedingung a(0) = 1, und diese Minimum-Norm-Lösung ist allgemein für ein unterbestimmtes lineares Gleichungssystem A * x = b durch

$$x = A^H *(A*A^H)^{-1} * b$$

gegeben (s. z.B. das Lehrbuch von Marple, Seite 77). Es wurde empirisch festgestellt, daß diese Minimum-Norm-Lösung des Gleichungssystems (7a) in im zweiten Schritt zu sehr guten Ergebnissen für die gesuchten Frequenzen führt.

Statt mit der Datenmatrix $D_{NL}$ können diese Berechnungen auch mit der Kovarianzenmatrix $D_{NL}*D_{NL}^H$ durchgeführt werden.

Eine vorteilhafte Variante des beschriebenen PC-Verfahrens ergibt sich in der "State Space"-Darstellung (B. D. Rao, K. S. Arun: "Model Based Processing of Signals: A State Space Approach", Proc. IEEE 80, 283 - 309 (1992)). Ausgangspunkt ist die p-rangige Näherung $D\underline{\,}_{NL}$ aus (9), nämlich

$$D\underline{\,}_{NL} = U * S\underline{\,} * V^H. \tag{9a}$$

Es läßt sich zeigen, daß das Produkt der beiden ersten Faktoren U * S̱ faktorisiert werden kann gemäß

$$U_- \ast S_- = \begin{bmatrix} h \\ hF \\ hF^2 \\ \vdots \\ hF^L \end{bmatrix},$$

wobei h ein Zeilenvektor der Länge p und F die "State-Transition-Matrix" mit p Zeilen und p Spalten ist. Die Eigenwerte (Eigenvalues) und Eigenvektoren (Eigenvectors) von F liefern die Signalfrequenzen $f_k$ und die dazugehörigen Amplituden $c_k$, ohne daß die FBLP-Koeffizienten a(k) berechnet werden müssen.

Zur Berechnung von F kann man folgendermaßen vorgehen: In der Matrix $U \ast S_-$ mit L + 1 Zeilen und p Spalten wird einmal die letzte Zeile weggelassen (das Ergebnis heiße G1) und ein anderes Mal die erste Zeile (G2). Dann gilt $G1 \ast F = G2$. Wegen L > p ist dieses Gleichungssystem für F überbestimmt und hat die LS-Lösung

$$F = (G1^H \ast G1)^{-1} \ast G1^H \ast G2.$$

Die Matrix $\Lambda = Q^{-1} \ast F \ast Q$, gebildet mit einer Matrix Q, in deren Spalten die Eigenvektoren von F stehen, ist eine Diagonalmatrix mit den Diagonalelementen $\Lambda_{kk} = \exp(2\pi i f_k)$. Die $f_k$ sind die gesuchten Frequenzen. Zur Bestimmung der Amplituden $c_k$ bildet man

$A = U \ast S_- \ast Q$ und $B = Q^{-1} \ast V^H$. Dann ergibt sich für jedes k die Amplitude $c_k$ durch Multiplikation des in der k-ten Spalte stehenden Elementes der ersten Zeile von A mit dem in der k-ten Zeile stehenden Element der ersten Spalte von B und Division durch den zugehörigen Eigenwert von F gemäß

$$c_k = A_{1k} \cdot B_{k1} / \exp(2\pi \cdot i \cdot f_k).$$

Aufgabe der vorliegenden Erfindung ist es, ein verbessertes Verfahren anzugeben, mit dem die Abstände und/oder Geschwindigkeiten mehrerer Objekte gleichzeitig genau gemessen werden können. Außerdem soll eine für dieses Verfahren geeignete Vorrichtung angegeben werden.

Diese Aufgabe wird mit dem Verfahren mit den Merkmalen des Anspruches 1 und mit dem Sensorsystem mit den Merkmalen des Anspruches 4 gelöst. Jeweilige Ausgestaltungen ergeben sich aus den abhängigen Ansprüchen.

Bei dem erfindungsgemäßen Verfahren wird mittels eines Sensors, der Signale, die sich in Wellenform ausbreiten, aussendet und nach Reflexion an Meßobjekten empfängt und zu Meßsignalen aufbereitet, vorzugsweise mittels eines FMCW-Sensors, ein Meßsignal als Überlagerung verschiedener Frequenzen erfaßt und die Auswertung dieses Meßsignals mit Hilfe einer hochauflösenden Frequenzanalyse durchgeführt. Es werden diskret abgetastete, in äquidistanten zeitlichen Abständen zueinander erfaßte Werte des Meßsignales als Datenmatrix in Form einer doppelten Hankel-Matrix angeordnet und damit eine SVD (Singular Value Decomposition) wie eingangs beschrieben durchgeführt. Aus den PC (Principal Components) der erhaltenen Diagonalmatrix S und aus den dazugehörigen Teilmatrizen der unitären Transformationsmatrizen U und ggf. V werden dann Schätzwerte für die Signalfrequenzen und die dazugehörigen Amplituden berechnet.

Das Verfahren kann vorzugsweise bei einem Sensorsystem verwendet werden, das im Prinzip wie eingangs erläutert aufgebaut ist. Statt eines Mischers kann eine andere geeignete Einrichtung zur Aufbereitung eines Meßsignales vorgesehen sein. Es können sogenannte IQ-Mischer zur Erzeugung eines komplexwertigen Meßsignals eingesetzt werden. Für das erfindungsgemäße Verfahren genügen jedoch reelle Meßwerte, für die der konjugiert komplexe Wert gleich ist dem ursprünglichen Wert. Das Meßsignal mess(t) wird vorzugsweise weitgehend von in der Anordnung auftretenden Fehlern der Frequenzmodulation befreit, was z. B. mit einer Verzögerungsleitung zur Erzeugung eines Bezugssignales geschehen kann. Damit die bei dem erfindungsgemäßen Verfahren eingesetzte Frequenzanalyse gute Meßergebnisse liefert, müssen die in dem Meßsignal auftretenden Frequenzen nach Möglichkeit zeitlich konstant gehalten werden. Wenn eine systematische Frequenzdrift auftritt, kann die Veränderung der Frequenz z. B. dadurch kompensiert werden, daß die Meßwerte in kontinuierlich variierenden Zeitabständen abgetastet werden. Vorteilhaft ist ein Sensorsystem mit einer technischen Konzeption, die von vornherein ein Meßsignal mit, von Rauschen abgesehen, konstanten Frequenzen liefert. In der Auswerteeinheit AE werden Meßwerte gespeichert und damit Berechnungen zur Frequenzanalyse durchgeführt. Das geschieht bevorzugt in einem Digitalsignalprozessor mit den zuvor mittels eines Analog-Digital-Wandlers digitalisierten Werten.

Das in der Einleitung beschriebene Verfahren zur Frequenzanalyse wird bei dem erfindungsgemäßen Auswerteverfahren eingesetzt und liefert besonders gute Ergebnisse, wenn die nachfolgend erläuterten Bedingungen eingehalten werden. Die angegebenen grundsätzlichen mathematischen Umformungen und Ableitungen können durch äquivalente Umformungen und damit erzielbare Vereinfachungen im Rechenablauf ersetzt werden.

N Meßwerte

$$x(n) \ = \ \sum_{k=1}^{p} c_k \, e^{2\pi i f_k n} \ + \ R(n), \qquad n = 1, \ 2, \ 3, \ \ldots \ , \ N,$$

die jeweils als eine Überlagerung von p als komplexe Exponentialfunktionen darstellbaren Signalanteilen angenommen werden, werden zur Auswertung herangezogen. Die verschiedenen Frequenzen $f_k$ resultieren z. B. aus der Reflexion durch verschiedene Meßobjekte unterschiedlicher Entfernungen und aus der Dopplerverschiebung der Sendefrequenzen durch sich bewegende Meßobjekte. Aus den Meßwerten x(n), die in der Auswerteeinheit gespeichert werden, werden in einem ersten Schritt die FBLP-Koeffizienten (Forward Backward Linear Prediction) a(k) (k=0,...,L) berechnet, die die Gleichungen

$$a(0)x(n) + a(1)x(n-1) + \ldots + a(L)x(n-L) = 0$$

und

$$a(0)x^*(n-L) + a(1)x^*(n-L+1) + \ldots . +a(L)x^*(n) = 0$$

für n = L+1, L+2, ..., N mit p < L < N - p erfüllen.

Die Koeffizienten-Matrix (Datenmatrix) der zu bestimmenden a(k)

$$D_{NL} = \begin{bmatrix} x(1) & x(2) & \ldots & x(N-L) & x*(N) & x*(N-1) & \ldots & x*(L+1) \\ x(2) & x(3) & \ldots & x(N-L+1) & x*(N-1) & x*(N-2) & \ldots & x*(L) \\ \vdots & \vdots & \vdots & \vdots & \vdots & \vdots & \vdots & \vdots \\ x(L+1) & x(L+2) & \ldots & x(N) & x*(N-L) & x*(N-L-1) & \ldots & x*(1) \end{bmatrix}$$

wird wie in der Einleitung beschrieben zerlegt in $U * S * V^H$ mit zwei unitären Matrizen U und V sowie einer (nur in Spezialfällen quadratischen) "Diagonal-Matrix" S mit nichtnegativen Diagonalelementen. Es wird $D_{NL} = U * \underline{S} * V^H$ mit der Näherung $\underline{S}$, in der die kleinen Diagonalelemente von S gleich 0 gesetzt sind, bestimmt. Die FBLP-Koeffizienten a(k) werden aus dem Gleichungssystem

$[a(L), a(L-1), ..., a(0)] * D_{NL} = 0$ mit dieser Matrix $D_{NL}$ als Minimum-Norm-Lösung berechnet.

Vorteilhaft bei der Bestimmung von $D_{NL}$ ist, daß die Anzahl p der Frequenzen ebenfalls bestimmt wird, so daß auf die Anzahl der Meßgrößen, die z. B. durch die zunächst unbekannte Anzahl der vorhandenen Meßobjekte gegeben ist, rückgeschlossen werden kann. Die Bedingung, nach der p bestimmt wird, kann an die zu messenden Größen oder an begleitende Umstände der Messung angepaßt werden. Ein Kriterium zur Festlegung, welche der Diagonalelemente von S gleich null gesetzt werden, ist z. B. die Differenz aufeinanderfolgender Werte der Diagonalelemente. Wenn diese Differenz beispielsweise geringer als 2 dB wird und so gering bleibt, setzt man die sich nur weniger als 2 dB voneinander unterscheidenden Diagonalelemente gleich null.

Die gesuchten Signalfrequenzen $f_k$ werden dann in einem zweiten Schritt aus den Nullstellen $z_k$ des mit den a(k) gemäß

$$P(z) \;=\; \sum_{m=0}^{L} a(m)\, z^{L-m}$$

gebildeten Polynoms P(z) berechnet. Ist $P(z_k) = 0$, so ist $\exp(2\pi \cdot i \cdot f_k) = z_k$. Die Größen $c_k$ werden in einem dritten Schritt z. B. durch LS-Verfahren (Least Squares) bestimmt.

Die deutlich besten Ergebnisse werden bei diesem Verfahren erzielt, wenn für L ein Wert zwischen $1/2 \cdot N$ und $2/3 \cdot N$ gewählt wird. In praktischen Fällen kann L von diesem Wert abweichen, es genügt $L = 1/3 \cdot N$, in manchen Fällen auch $L = 1/4 \cdot N$.

Eine vorteilhafte Variante des Verfahrens ergibt in der State-Space-Darstellung. Ausgangspunkt ist die p-rangige Näherung $D_{NL} = U * S\_ * V^H$. Die Matrix G1, die aus der Matrix $U * S\_$ durch Weglassen der letzten Zeile entsteht, und die Matrix G2, die aus der Matrix $U * S\_$ durch Weglassen der ersten Zeile entsteht, werden berechnet. Die State-Transition-Matrix F mit p Zeilen und p Spalten wird gemäß $F = (G1^H * G1)^{-1} * G1^H * G2$ berechnet. Die Eigenwerte $\exp(2\pi \cdot i \cdot f_k)$ von F ergeben die Frequenzen. Zur Bestimmung der Amplituden $c_k$ werden die Matrix Q, in deren Spalten die Eigenvektoren von F stehen, und die erste Zeile von
$A = U * S\_ * Q$ und die erste Spalte von $B = Q^{-1} * V^H$ berechnet. Dann wird $c_k$ gemäß $c_k = A_{1k} \cdot B_{k1}/\exp(2\pi \cdot i \cdot f_k)$ berechnet.

## Patentansprüche

1. Verfahren zur Abstands- und Geschwindigkeitsmessung, bei dem

   - Signale, die sich in Wellenform ausbreiten, ausgesendet und nach Reflexion an Meßobjekten als Meßsignale aufgenommen werden, so daß diese Meßsignale eine Frequenzmodulation aufweisen, die von dem Wert oder den Werten der zu messenden Größe oder Größen abhängt, und
   - eine Analyse des Frequenzspektrums dieser Meßsignale anhand einer zuvor festgelegten Anzahl von Meßwerten erfolgt, indem

     a) in einem ersten Schritt diese Anzahl von Meßwerten durch Abtasten des Meßsignales in äquidistanten Zeitabständen erfaßt und in vorgegebener Reihenfolge gespeichert wird,
     b) in einem zweiten Schritt bis auf äquivalente Umformungen eine Datenmatrix, in der die Meßwerte chronologisch als doppelte Hankel-Matrix angeordnet sind, nach einem SVD-Verfahren diagonalisiert wird,
     c) in einem dritten Schritt eine Näherung der diagonalisierten Datenmatrix bestimmt wird, indem Diagonalelemente ab einer vorgegebenen oder aus der Verteilung der Diagonalelemente errechneten Grenze gleich null gesetzt werden, und
     d) in einem vierten Schritt aus den übrigen Diagonalelementen (principle components) Frequenzen berechnet werden.

2. Verfahren nach Anspruch 1, bei dem
   in dem vierten Schritt FBLP-Koeffizienten a(m) als Minimum-Norm-Lösung berechnet werden und die Frequenzen $f_k$ aus den Nullstellen $z_k = \exp(2\pi \cdot i \cdot f_k)$ des Polynoms

$$\sum_{m=0}^{L} a(m)\, z^{L-m}$$

   berechnet werden.

3. Verfahren nach Anspruch 1, bei dem
   in dem vierten Schritt zu der in dem dritten Schritt berechneten Näherung eine State-Transition-Matrix berechnet wird und die Frequenzen aus den Eigenwerten $\Lambda_{kk} = \exp(2\pi \cdot i \cdot f_k)$ dieser State-Transistion-Matrix berechnet werden.

4. Vorrichtung zur Abstands- und Geschwindigkeitsmessung,

   - bei der eine Signalquelle (MO) zur Erzeugung von Signalen, die sich wellenförmig ausbreiten, vorhanden ist,
   - bei der eine Sende- und Empfangseinrichtung (SEE) vorhanden ist, die dafür vorgesehen ist, Signale auszusenden und von Meßobjekten reflektierte Signale zu empfangen,
- bei der eine Einrichtung zur Aufbereitung eines Meßsignales vorhanden ist,
- bei der Mittel vorgesehen sind, mit denen bewirkt wird, daß das Meßsignal zeitlich stabile Frequenzen aufweist, aus denen eine zu messende Größe oder mehrere zu messende Größen bestimmt werden können, und
- bei der eine Auswerteeinrichtung (AE) vorhanden ist, die dafür vorgesehen ist,

a) in einem ersten Schritt eine zuvor festgelegte Anzahl von Meßwerten durch Abtasten des Meßsignales in äquidistanten Zeitabständen zu erfassen und in vorgegebener Reihenfolge zu speichern,
b) in einem zweiten Schritt bis auf äquivalente Umformungen eine Datenmatrix, in der die Meßwerte chronologisch als doppelte Hankel-Matrix angeordnet sind, nach einem SVD-Verfahren zu diagonalisieren,
c) in einem dritten Schritt eine Näherung der diagonalisierten Datenmatrix zu bestimmen, indem Diagonalelemente ab einer vorgegebenen oder aus der Verteilung der Diagonalelemente errechneten Grenze gleich null gesetzt werden, und
d) in einem vierten Schritt aus den übrigen Diagonalelementen (principle components) Frequenzen zu berechnen.

**5.** Vorrichtung nach Anspruch 4,
bei der die Mittel, mit denen bewirkt wird, daß das Meßsignal zeitlich stabile Frequenzen aufweist, umfassen

- eine Einrichtung zur Frequenzmodulation der von der Signalquelle erzeugten Signale und
- eine Mischeinrichtung (MI1; PH, MI2) zum Mischen eines empfangenen Signals mit einem aktuellen Sendesignal.

**6.** Vorrichtung nach Anspruch 5,
bei der die Mittel, mit denen bewirkt wird, daß das Meßsignal zeitlich stabile Frequenzen aufweist, weiter umfassen eine Einrichtung zur Erzeugung eines Bezugssignales durch Mischen des von der Signalquelle erzeugten Signales mit einem dazu zeitlich verzögerten Signal.

## Claims

**1.** Method for distance and speed measurement, in which

- signals, which propagate in wave form, are transmitted and, after reflection from measurement objects, they are received as measurement signals, so that these measurement signals have a frequency modulation which depends on the value or the values of the quantity or quantities to be measured, and
- an analysis of the frequency spectrum of these measurement signals is carried out as follows with the aid of a previously established number of measurement values:

a) in a first step, this number of measurement values are recorded by sampling the measurement signal at equidistant time intervals, and they are stored in a predetermined order,
b) in a second step, to within equivalent rearrangements, a data matrix, in which the measurement values are arranged chronologically as a double Hankel matrix, is diagonalised according to an SVD method,
c) in a third step, an approximation of the diagonalised data matrix is determined by setting diagonal elements beyond a limit, which is predetermined or is formulated from the distribution of the diagonal elements, equal to zero, and
d) in a fourth step, frequencies are calculated from the other diagonal elements (principal components).

**2.** Method according to Claim 1, in which
in the fourth step, FBLP coefficients a(m) are calculated as a minimum norm solution, and the frequencies $f_k$ are calculated from the zeros $z_k = \exp(2\Pi \cdot i \cdot f_k)$ of the polynomial

$$\sum_{m=0}^{L} a(m) z^{L-m} \ .$$

**3.** Method according to Claim 1, in which

in the fourth step, a state transition matrix is calculated for the approximation calculated in the third step, and the frequencies are calculated from the eigenvalues $\Lambda_{kk} = \exp(2\Pi \cdot i \cdot f_k)$ of this state transition matrix.

4. Device for distance and speed measurement,

- in which there is a signal source (MO) for generating signals, which propagate in wave form,
- in which there is a transmission and reception instrument (SEE), which is intended to transmit signals and to receive signals reflected by measurement objects,
- in which there is an instrument for processing a measurement signal,
- in which there are means, the effect achieved by which is that the measurement signal has stable frequencies as a function of time, from which a quantity to be measured or a plurality of quantities to be measured can be determined, and
- in which there is an evaluation instrument (AE), which is intended,

  a) in a first step, to record a previously established number of measurement values by sampling the measurement signal at equidistant time intervals, and to store them in a predetermined order,
  b) in a second step, to within equivalent rearrangements, to diagonalise a data matrix, in which the measurement values are arranged chronologically as a double Hankel matrix, according to an SVD method,
  c) in a third step, to determine an approximation of the diagonalised data matrix by setting diagonal elements beyond a limit, which is predetermined or is formulated from the distribution of the diagonal elements, equal to zero, and
  d) in a fourth step, to calculate frequencies from the other diagonal elements (principal components).

5. Device according to Claim 4,
in which the means, the effect achieved by which is that the measurement signal has stable frequencies as a function of time, comprise

- an instrument for frequency modulation of the signals generated by the signal source, and
- a mixing instrument (MI1; PH, MI2) for mixing a received signal with a current transmission signal.

6. Device according to Claim 5,
in which the means, the effect achieved by which is that the measurement signal has stable frequencies as a function of time, furthermore comprise an instrument for generating a reference signal by mixing the signal generated by the signal source with a signal which is time-delayed relative thereto.


**Revendications**

1. Procédé pour la mesure de distance et de vitesse, dans lequel

- on émet des signaux qui se propagent sous forme d'onde et on les enregistre comme signaux de mesure après réflexion sur des objets de mesure de telle sorte que ces signaux de mesure présentent une modulation de fréquence qui dépend de la valeur ou des valeurs de la grandeur ou des grandeurs à mesurer, et
- on effectue une analyse du spectre fréquentiel de ces signaux de mesure à l'aide d'un nombre, fixé au préalable, de valeurs mesurées,

  a) dans une première étape, on détecte ce nombre de valeurs mesurées par échantillonnage du signal mesuré à des intervalles de temps équidistants et on les mémorise dans un ordre prédéterminé,
  b) dans une deuxième étape, mis à part des transformations équivalentes, on rend diagonale selon un procédé SVD une matrice de données dans laquelle les valeurs mesurées sont placées chronologiquement sous forme de matrice de Hankel double,
  c) dans une troisième étape, on détermine une approximation de la matrice de données rendue diagonale en mettant à zéro des éléments de diagonale à partir d'une limite prédéterminée ou calculée suivant la distribution des éléments de diagonale, et
  d) dans une quatrième étape, on calcule des fréquences à partir des autres éléments de diagonale (principal components).

2. Procédé selon la revendication 1, dans lequel, dans la quatrième étape, on calcule des coefficients FBLP a(m) en tant que solution à norme minimale et on calcule les fréquences $f_k$ à partir des zéros $z_k = \exp(2\pi \cdot i \cdot f_k)$ du polynôme

$$\sum_{m=0}^{L} a(m) \; z^{L-m}.$$

3. Procédé selon la revendication 1, dans lequel, dans la quatrième étape, on calcule pour l'approximation calculée dans la troisième étape une matrice de transition d'état et on calcule les fréquences à partir des valeurs propres $\Lambda_{kk} = \exp(2\pi \cdot i \cdot f_k)$ de cette matrice de transition d'état.

4. Dispositif pour la mesure de distance et de vitesse, dans lequel

   - il est prévu une source de signal (MO) pour la production de signaux qui se propagent sous forme d'onde,
   - il est prévu un dispositif d'émission et de réception (SEE) pour émettre des signaux et pour recevoir des signaux réfléchis par des objets de mesure,
   - il est prévu un dispositif pour la préparation d'un signal de mesure,
   - il est prévu des moyens avec lesquels on fait en sorte que le signal de mesure comporte des fréquences qui sont stables dans le temps et à partir desquelles une grandeur à mesurer ou plusieurs grandeurs à mesurer peuvent être déterminées, et
   - il est prévu un dispositif d'évaluation (AE) pour

     a) dans une première étape, détecter un nombre fixé au préalable de valeurs mesurées par échantillonnage du signal de mesure à des intervalles de temps équidistants et les mémoriser dans un ordre prédéterminé,
     b) dans une deuxième étape, mis à part des transformations équivalentes, rendre diagonale selon un procédé SVD une matrice de données dans laquelle les valeurs mesurées sont placées chronologiquement sous forme de matrice de Hankel double,
     c) dans une troisième étape, déterminer une approximation de la matrice de données rendue diagonale en mettant à zéro des éléments de diagonale à partir d'une limite prédéterminée ou calculée à partir de la distribution des éléments de diagonale, et
     d) dans une quatrième étape, calculer des fréquences à partir des autres éléments de diagonale (principle components).

5. Dispositif selon la revendication 4, dans lequel les moyens avec lesquels on fait en sorte que le signal de mesure comporte des fréquences stables dans le temps comprennent

   - un dispositif pour la modulation de fréquence des signaux produits par la source de signal et
   - un dispositif mélangeur (MI1 ; PH, MI2) pour le mélange d'un signal reçu avec un signal d'émission actuel.

6. Dispositif selon la revendication 5, dans lequel les moyens avec lesquels on fait en sorte que le signal de mesure comporte des fréquences stables dans le temps comprennent en plus un dispositif pour la production d'un signal de référence par mélange du signal produit par la source de signal et d'un signal retardé.